# EUROPEAN PATENT SPECIFICATION

(11) **EP 3 445 826 B1**
(45) Date of publication and mention of the grant of the patent: **14.07.2021**
(21) Application number: 17718099.9
(22) Date of filing: 21.04.2017
(51) Int. Cl.: C09D 11/00, B41M 1/04, B41M 7/00, C09D 11/101, C09D 11/38

(54) **RADIATION CURABLE INK FORMULATION**
STRAHLUNGSHÄRTBARE TINTENFORMULIERUNG
FORMULATION D'ENCRE DURCISSABLE PAR RAYONNEMENT

(30) Priority: 21.04.2016 EP 16166375
(43) Date of publication of application: 27.02.2019
(73) Proprietor: Flint Group Germany GmbH, 70469 Stuttgart (DE)
(72) Inventor: JOHANSSON, Anders, 22240 Lund (SE); SMITH, Dale, Playmouth, MN 55446 (US); GAVELIN, Patrik, Rydebäck, 25733 (SE); NIELSEN, Christian Benedikt Orea, Dragør, 2791 (DK)
(74) Representative: Arnold & Siedsma
(86) International application number: PCT/EP2017/059534
(87) International publication number: WO 2017/182638

(56) References cited:
- WO-A1-2013/082262
- WO-A2-2015/023428

## Description

The invention relates to a radiation curable ink formulation comprising (meth)acrylate monomers. The invention further relates to a printing process using the ink formulation and to a printed food packaging or label for food packaging.

Flexographic printing processes are used for applying inks and coatings to printing materials which are then used for food packaging. Usually, flexographic printing systems and methods employ solvent based inks or water based inks which are dried after being printed. When drying the inks, the solvents are evaporated and may release volatile organic chemicals. Radiation curable inks, cured with the use of ultraviolet (UV) radiation, are also known for the use in flexographic printing methods. Such radiation curable inks comprise monomers and/or oligomers which are mixed with photoinitiators. The radiation curable inks are applied to a printing medium and are then cured by exposure to ultraviolet radiation.

When radiation curable inks and coatings are cured with Hg (mercury) lamps, photons with different wavelengths emitted from Hg lamps are absorbed by different photoinitiators which thereafter initiates curing processes. UV curable ink formulations usually comprise several photoinitiators in order to get good curing through the whole printed film layer. Some photoinitiators contribute to the through cure and cure in the bulk while others are used for the surface cure. Photoinitiators that are activated by photons with shorter wavelengths are predominantly contributing to the surface cure of the inks. Photoinitiators that are activated by photons with longer wavelengths are predominantly contributing to the curing below the surface. LED (light emitting diode) light sources can be used instead of Hg lamps for curing UV curable inks or coatings. The emitted UV light from LED light sources is nearly monochromatic. The wavelength that is emitted from the most common commercial LED light sources is at 405 nm, 395 nm, 385 nm or 365 nm. That means that the shorter wavelengths usually needed for the photoinitiators contributing to the surface cure are missing. Thus, the problem when curing with LED light sources is to achieve acceptable surface cure. This problem is particularly a weak point when printing on substrates that will be used for food packaging or on labels for food packaging.

Good through curing and surface curing are essential for printed inks on a food packaging or on labels used for food packaging in order to prevent that uncured components of the inks/coatings to migrate into the food in quantities above their SML (specific migration limit). However, the degree of curing itself is not the sole property that is determining whether a deposited cured ink can be described as low migration or not. Entities present in the formulation that are not chemically or physically cross-linked as a result of the manufacturing process (e.g. curing) can subsequently migrate from the cured ink. Typically, higher molecular weight species are less prone to migrate than comparatively lower molecular weight species but it is not *a priori* possible to determine whether a cured ink will release entities above the specific migration limits by knowledge of the composition alone.

Inks printed on substrates to be used in a food packaging intended for certain food type, storage and temperature, require that the ink components do not migrate under the food simulant conditions 95% ethanol at 10 days and 40°C.
Currently, no commercially available LED curing flexographic printing ink exists on the market, where the above migration properties are achieved.

Inks suitable for curing with either Hg lamps or LED light sources are already known. Specifically inks not intended for food packaging do not fall into the category of low migration inks as the amount of species migrating even from inks that appear fully cured exceeds the maximum limits (SML). In order to formulate inks for food packaging, photoinitiators specifically intended for low migration applications are chosen, which are typically different from photoinitiators used in other inks. Entities with comparatively lower molecular weight are also avoided in order to avoid migration into the food. That is the standard way to formulate inks for food packaging when curing with Hg lamps, which upon sufficient curing results in a cured ink with very low migration. Exposing the same ink to light from a LED light source will most likely not result in a cured ink with low migration properties due to the difference in the light absorbed by the photoinitiators - the spectrum of the emitted light from the LED light source (monochromatic) is significantly different from the light emitted from a Hg light source (polychromatic). The difference in curing as a result of using the LED light source as opposed to the Hg light source alone is the main reason as to why low migration properties are not achieved. Simply increasing the percentage of photoinitiators in the inks in order to improve for example the surface cure is not a viable route and the migration from the resulting printed packaging will be too high. These formulations do not pass migration tests as specified in "Commission regulation (EU) No. 10/2011" of January 14, 2011 combined with the limits specified in "The Swiss Ordinance SR 817.023.21" of November 23, 2005 when the food contact side of the packagings are exposed to 95% ethanol for 10 days at 40° C.

From WO2015/036613 A1 radiation curable compositions for food packaging and an inkjet printing method are known. The radiation curable inkjet ink comprises at least one non-polymerizable, non-polymeric bisacylphosphine oxide in a concentration of no more than 4.0 wt% based on the total weight of radiation curable inkjet ink; at least one monomer comprising at least one vinyl ether group and at least one polymerizable group selected from the group consisting of an acrylate group and a methacrylate group; and at least one polymerizable or polymeric thioxanthone, with the provision that if the at least one polymerizable or polymeric thioxanthone contains no tertiary amine group that the radiation curable composition further includes at least one tertiary amine co-initiator selected from the group consisting of ethylhexyl-4-dimethylaminobenzoate, a polymerizable co-initiator containing a tertiary amine and a polymeric co-initiator containing a tertiary amine. The ink is cured after ink jet printing using one or more UV LEDs. A polymerizable or non-polymerizable species is in this respect understood as a species that can or cannot, respectively, be incorporated as a repeating unit in a polymer.

Document WO 2015/023428 A2 discloses an energy curable photographic ink containing lactic acid resin.

Document WO 2013/082262 A1 discloses photoactive resins comprising an aromatic ketone monomer including a biphenyl moiety and a chain ending group selected from hydrogen, a methylol group and mixtures thereof.

It is an object of the present invention to provide a radiation curable ink formulation which is suitable for use in flexographic printing method and which can be adequately cured using LED light sources. The inks of the present invention are well cured with LED light sources through the whole layer including the surface. The cured ink/coating contains no substances migrating into the food above the specific migration limits (SML) for the substance and can hence be used on food packaging.

### Disclosure of the invention

The object is achieved by a radiation curable ink formulation, the formulation comprising:
a) 10 to 70 % by weight of at least one trifunctional (meth)acrylate monomer as component A, the at least one trifunctional (meth)acrylate monomer selected from the group consisting of trimethylolpropane triacrylate, ethoxylated trimethylolpropane triacrylate, pentaerythritol triacrylate, propoxylated glycerine triacrylate and mixtures thereof,
b) 5 to 40 % by weight of at least one (meth)acrylate monomer with a functionality of 4 or higher as component B, the at least one (meth)acrylate monomer selected from the group consisting of pentaerythritol tetraacrylate, ethoxylated pentaerythritol tetraacrylate, di-trimethylolpropane tetraacrylate, di-pentaerythritol pentaacrylate, dipentaerythritol hexaacrylate and mixtures thereof,
c) 0 to 20 % by weight of one or more monofunctional (meth)acrylate monomer and/or difunctional (meth)acrylate monomer as component C, the one or more difunctional (meth)acrylate monomer selected from the group consisting of dipropylene glycol diacrylate, tripropylene glycol diacrylate, 1,6 hexanediol diacrylate, triethyleneglycol divinylether, 1,4-cyclohexane dimethanol divinyl ether and mixtures thereof,
d) 2 to 30 % by weight of at least one photoinitiator as component D, the at least one photoinitiator being selected from the group consisting of di-ester of carboxymethoxybenzophenone and polytetramethyleneglycol 250, di-ester of carboxymethoxy thioxanthone and polytetramethyleneglycol 250, Bis(2,4,6-Trimethylbenzoyl)phenylphosphine oxide and mixtures thereof,
e) 15 to 50 % by weight of at least one amine synergist as component E, the at least one amine synergist being selected from the group consisting of aminobenzoates, acrylated amines and amine modified acrylates and mixtures thereof,
f) 0 to 40 % by weight of one or more (meth)acrylate oligomer as component F, the one or more (meth)acrylate oligomer being selected from the group consisting of epoxy acrylates, polyester acrylates, urethane acrylates, melamine acrylates, polyether acrylates, acrylic acrylates and mixtures thereof, and
g) 0 to 60 % by weight of one or more pigment and/or additive as component G.

Optionally, the inventive radiation curable ink formulation may comprise (meth)acrylate oligomers, pigments and further additives. The percentages are given in % by weight in relation to the entire ink formulation.

The proposed radiation curable ink formulation is suitable for use in flexographic printing methods and may be adequately cured when exposed to an LED light source. Migration tests as specified in "Commission regulation (EU) No. 10/2011" of January 14, 2011 have shown that migration from the cured inks tested with 95% ethanol for 10 days at 40°C released amounts of chemicals under the limits specified in "The Swiss Ordinance SR 817.023.21" of November 23, 2005.

### (Meth)acrylate monomers

The rheology of the inventive ink formulation is adapted so that it can be printed in flexographic printing presses to obtain an adequately cured printed ink layer on a substrate. The viscosity of the ink formulation can in part be adjusted by selecting the monomers. The choice of the monomers also has an impact on the reactivity of the ink formulation and on the crosslink density when cured. Thus, the properties of the ink formulation and the cured ink can be adjusted by choosing the structure and acrylate functionality of the monomers.

Mono- or difunctional monomers are optional. They usually reduce the viscosity more efficiently than monomers with higher functionality. They may be used in small quantities to reduce the viscosity of the ink. The percentage of mono and difunctional monomers is preferably kept as low as possible in order to keep migration low, as they usually are prone to migrate. The amount of mono- and difunctional monomers is kept below 20 % by weight. Preferably, the amount of mono and difunctional monomers in the formulation is less than 10 % by weight and most preferably less than 2 % by weight.

Suitable difunctional (meth)acrylates are dipropylene glycol diacrylate, tripropylene glycol diacrylate and 1,6 hexanediol diacrylate. Monomers with vinyl ether functionality which can also be used are triethyleneglycol divinylether or 1,4-cyclohexane dimethanol divinyl ether.

Suitable trifunctional (meth)acrylate monomers are trimethylolpropane triacrylate, ethoxylated trimethylolpropane triacrylate, pentaerythritol triacrylate and propoxylated glycerine triacrylate.

Suitable (meth)acrylate monomers with functionality of 4 or higher are pentaerythritol tetraacrylate, ethoxylated pentaerythritol tetraacrylate, di-trimethylolpropane tetraacrylate, di-pentaerythritol pentaacrylate and dipentaerythritol hexaacrylate.

In the inventive ink formulation more than one type of meth(acrylate) monomer is present. The total amount of meth(acrylate) monomers is from 10 to 70 % by weight. Preferably the total amount of meth(acrylate) monomers is chosen from 20 to 60 % by weight and most preferably the total amount of meth(acrylate) monomers is chosen from 30 to 50 % by weight based on the total weight of the ink formulation.

The amount of (meth)acrylate monomers with functionality of more than 3 must be high enough in order to achieve sufficient reactivity in order to achieve sufficient curing of the formulation. The amount of (meth)acrylate monomers with functionality higher than three is from 5 to 40 % by weight with respect to the entire ink formulation. Preferably, the amount of monomers with functionality of more than three is chosen from 5 to 30 % by weight and most preferably from 5 to 18 % by weight.

The good cure of the inventive ink formulation is achieved by incorporating acrylate monomer components having a functionality 4 or more in combination with one or more photoinitators and one or more amine synergists.

### Photoinitiators

In the present invention, a photoinitiator is defined as a moiety which, on absorption of light, generates reactive species (radicals) and initiates one or several chemical reactions or transformation. One preferred property of the photoinitiator is good overlap between the light source spectrum and the photoinitiator absorption spectrum. Another desired property is a minor or no overlap between the photoinitiator absorption spectrum and the intrinsic combined absorption spectrum of the other components in the matrix composition. The photoinitiator moieties can as an example be pendant on a polymer. This means that they are attached to the polymer at points other than at the polymer ends. The photoinitiator moieties used in the present invention may independently be cleavable (Norrish Type I) or non-cleavable (Norrish Type II). Upon excitation, cleavable photoinitiator moieties spontaneously break down into two radicals, at least one of which is reactive enough to abstract a hydrogen. Benzoin ethers (including benzil dialkyl ketals), phenyl hydroxyalkyl ketones and phenyl aminoalkyl ketones are important examples of cleavable photoinitiator moieties.

Non-cleavable photoinitiator moieties do not break down upon excitation, thus providing fewer possibilities for the leaching of small molecules from the matrix composition. Excited non-cleavable photoinitiators do not break down to radicals upon excitation, but abstract a hydrogen atom from an organic molecule or, more efficiently, abstract an electron from an electron donor (such as an amine or a thiol). The electron transfer produces a radical anion on the photoinitiator and a radical cation on the electron donor. This is followed by proton transfer from the radical cation to the radical anion to produce two uncharged radicals; of these the radical on the electron donor is sufficiently reactive to abstract a hydrogen atom. Benzophenones and related ketones such as thioxanthones, xanthones, anthraquinones, fluorenones, dibenzosuberones, benzils, and phenyl ketocoumarins are important examples of non-cleavable photoinitiators. Most amines with a C-H bond in α-position to the nitrogen atom and many thiols will work as electron donors.

Self-initiating photoinitiator moieties are within the scope of the present invention. Upon excitation with a suitable light source, such photoinitiators predominantly cleave by a Norrish type I mechanism and cross-link further without any conventional photoinitiator present. Recently, a new class of β-keto ester based photoinitiators has been introduced by M. L Gould, S. Narayan-Sarathy, T. E. Hammond, and R. B. Fechter from Ashland Specialty Chemical, USA (2005): "Novel Self-Initiating UV-Curable Resins: Generation Three", Proceedings from RadTech Europe 05, Barcelona, Spain, Oct. 18-20 2005, vol. 1, p. 245-251, Vincentz.

A blend of several photoinitiator moieties may exhibit synergistic properties, as is e.g. described by J. P. Fouassier: "Excited-State Reactivity in Radical Polymerization Photoinitiators", Ch. 1, pp. 1-61, in "Radiation curing in Polymer Science and technology", Vol. II ("Photo-initiating Systems"), ed. by J. P. Fouassier and J. F. Rabek, Elsevier, London, 1993. Briefly, efficient energy transfer or electron transfer takes place from one photoinitiator moiety to the other in the pairs [4,4'-bis(dimethyl-amino)benzophenone+benzophenone], [benzophenone+2,4,6-trimethylbenzophenone], [thioxanthone+methylthiophenyl morpholinoalkyl ketone].

Furthermore, it has recently been found that covalently linked 2-hydroxy-1-(4-(2-hydroxyethoxy)phenyl)-2-methylpropan-1-one, which is commercially available with the trade name Irgacure 2959, and benzophenone in the molecule 4-(4-benzoylphenoxyethoxy)phenyl 2-hydroxy-2-propyl ketone gives considerably higher initiation efficiency of radical polymerization than a simple mixture of the two separate compounds, see S. Kopeinig and R. Liska from Vienna University of Technology, Austria (2005): "Further Covalently Bonded Photoinitiators", Proceedings from RadTech Europe 05, Barcelona, Spain, Oct. 18-20 2005, vol. 2, p. 375-81, Vincentz. This shows that different photoinitiator moieties may show significant synergistic effects when they are present in the same oligomer or polymer. Each and every one of the above-discussed types of photoinitiators and photoinitiator moieties may be utilised as photoinitiator moieties in the present invention.

Examples of commercially available photoinitators are, 2-HYDROXY-2-METHYL PHENYLPROPAN-1-ONE, 4-PHENYL BENZOPHENONE, BENZIL-DIMETHYL-KETAL, BENZOPHENONE S744, CGI 2331, CYRACURE PI UVI-6992, DETX, DIPHENYL TRIMETHYLBENZOYLPHOSPHINE OXIDE, ESACURE 1001, ESAKURE KIP 75 LT, GENOCURE BAPO, GENOCURE BDMM, GENOCURE MBB, GENOCURE MBP, IRGACURE 184, IRGACURE 2022, Genpol TX-1, IRGACURE 369, IRGACURE 379, IRGACURE 500, IRGACURE 819, IRGACURE LEX 201, ITX ISOPROPYLTHIOXANTHONE, OMNIPOL 910, OMNIPOL 9220, OMNIPOL-BP, Omnipol BL 730, OMNIPOL-TX, PHENYL BENZOPHENONE, , SPEEDCURE 7005, SPEEDCURE 7010, SPEEDCURE 7010-L, SPEEDCURE MBB, SPEEDECURE 3010, TPO-L, 1-HYDROXYCYCLOHEXYL PHENYL KETONE, ETHYL MICHLER'S KETONE, OMNIRAD 380.

Further photoinitiators are disclosed on pages 2 to 5 and the examples of WO2009/060235 (Lambson) and in the last paragraph of page 1 to first paragraph of page 20 of WO2010/124950 (Siegwerk). Other suitable polymeric photoinitiators have recently been reviewed by Hrdlovic P. (Polymer News, 30(6), 179-182 (2005) and Polymer News, 30(8), 248-250 (2005)) and Corrales T. (Journal of photochemistry and photobiology A: Chemistry 159 (2003), 103-114). Further suitable polymeric photoinitiators can be found in Crivello, J. V., et al.; Chemistry & technology of UV & EB Formulation for Coatings, Inks & Paints. Volume III: Photoinitiators for Free Radical, Cationic & Anionic Photopolymerisation, 2nd edition, John Wiley & Sons Ltd in association with SITA Technology Ltd, London, UK, 1998 edited by Dr. G. Bradley; ISBN 0471 978922, page 208-224.

Preferred photoinitiators are Omnipol BP (di-ester of carboxymethoxybenzophenone and polytetramethyleneglycol 250), Omnipol TX (di-ester of carboxymethoxy thioxanthone and polytetramethyleneglycol 250) and Omnirad 380 (Bis(2,4,6-Trimethylbenzoyl)phenylphosphine oxide) or combinations of at least two of these photoinitiators.

The amount of the one or more photoinitator in the inventive ink formulation is from 2 to 30 % by weight. Preferably, the amount of photoinitator is chosen from 4 to 18 % by weight and most preferably the amount of photoinitator is chosen from 6 to 13 % by weight.

### Amine synergist:

Using at least one amine synergist is essential for the surface cure of the inventive ink formulation. The amine synergist is chosen from the group consisting of aminobenzoates, acrylated amines and amine modified acrylates or a combination of at least two of said synergists. Depending on their individual properties these can be combined to also contribute to e.g. hardness, flexibility and adhesion of the cured ink.

Examples of aminobenzoates includeSpeedcure EDB, Speedcure DMB, Speedcure EHA, Speedcure BDMB, Speedcure XFLM01, Speedcure XFLM02, Speedcure EMD, Speedcure BEDB, Speedcure 7040, Speedcure EPD.

Examples of amine modified acrylates and acrylated amines include Ebecryl P115 (Allnex), Ebecryl 7100 (Allnex), Ebecryl 80 (Allnex), Ebecryl 81 (Allnex), Ebecryl 83 (Allnex), Ebecryl 85 (Allnex), Ebecryl 880 (Allnex), Ebecryl LEO10551 (Allnex), Ebecryl LEO10552 (Allnex), Ebecryl LEO10553 (Allnex), Ebecryl 3600 (Allnex), Ebecryl 3703 (Allnex), DEAEMA (BASF). DMAEMA (BASF), TBAEMA (BASF), Genomer 5271 (Rahn), Genomer 5142 (Rahn), Genomer 5161 (Rahn), Genomer 5275 (Rahn), CN UVA 421 (Sartomer), CN3702 (Sartomer), CN3715 (Sartomer), CN3715 LM (Sartomer), CN3755 (Sartomer), CN381 (Sartomer), CN 386 (Sartomer), CN501 (Sartomer), (E)-Methyl 3-(2-amino-5-methylpyridin-3-yl)acrylate, Methyl 3-(2-amino-4-methoxypyridin-3-yl)acrylate, Methyl 3-(3-amino-5-methoxypyridin-4-yl)acrylate, (E)-Methyl 3-(2-amino-5-fluoropyridin-3-yl)acrylate, ETHYL 2-BENZOYL-3-(((4-ETHOXYANILINO)CARBOTHIOYL)AMINO)ACRYLATE, METHYL 2-CYANO-3-((4-PYRIDINYLCARBOTHIOYL)AMINO)ACRYLATE, METHYL 3-(DIMETHYLAMINO)-2-((2-THIENYLCARBONYL)AMINO)ACRYLATE, ETHYL 2-CYANO-3-((2-METHYL-1,3-BENZOTHIAZOL-6-YL)AMINO)ACRYLATE, ETHYL 2-CYANO-3-((2-METHYL-1,3-BENZOXAZOL-5-YL)AMINO)ACRYLATE, METHYL 3-CHLORO-3-((4-CHLOROPHENYL)THIO)-2-((4-METHYLBENZOYL)AMINO)ACRYLATE, 2-MEO-4-(2-(((3,4,5-TRIMETHOXYBENZOYL)AMINO)AC)CARBOHYDRAZONOYL)PH 3-PH-ACRYLATE, 4-BR-2-(2-(((3,4,5-TRIMETHOXYBENZOYL)AMINO)AC)CARBOHYDRAZONOYL)PH 3-PH-ACRYLATE, 2-MEO-4-(2-((((4-ME-PH)SULFONYL)AMINO)ACETYL)CARBOHYDRAZONOYL)PH 3-PH-ACRYLATE, 4-BR-2-(2-((((4-METHYLPHENYL)SULFONYL)AMINO)AC)CARBOHYDRAZONOYL)PH 3-PH-ACRYLATE, 5-(Dimethylaminomethylene)-2,2-dimethyl-1,3-dioxane-4,6-dione, Laromer PO 77 F, Laromer PO 84 F, Laromer PO 94 F, Laromer LR 8997, Laromer PO 83F, Laromer LR 8889, Laromer LR 8869, Laromer LR 8996 and Photomer 4775.

Preferably the synergist is selected from Photomer 4775, Ebecryl 85 or a combination of the two synergists.

The total amount of the one or more amine synergist in the ink formulation is from 15 to 50 % by weight. Preferably the amount of amine synergist is from 15 to 35 % by weight and most preferably the amount of amine synergist is from 15 to 27 % by weight.

Optionally, the inventive ink formulation may comprise one or more oligomeric acrylates or methacrylates. If the ink formulation comprises one or more oligomeric acrylate or methacrylte the one or more oligomeric (meth)acrylate is preferably included in the ink formulation in an amount of from 0.1 to 40 % by weight. More preferably the amount of oligomeric (meth)acrylate is chosen from 0.1 to 25 % by weight and most preferably the amount of oligomeric (meth)acrylate is chosen from 0.1 to 13 % by weight.

Examples of suitable oligomers that can be used include epoxy acrylates, polyester acrylates, urethane acrylates, melamine acrylates, polyether acrylates, acrylic acrylates.

### Pigments

The inventive curable ink formulation may optionally comprise one or more pigment. If the ink formulation comprises one or more pigment, the one or more pigment is preferably included in an amount from 0.1 to 60 % by weight, more preferably in an amount of from 0.5 to 50 % by weight.

Suitable pigments include

CI (color index) pigment yellow:
NY 2, NY 3, NY 6, NY8, NY 10., NY 11, NY 13, NY 14, NY 20, NY 24, PY 1, PY 1:1, PY 2, PY 3, PY 4, PY 5, PY 6, PY 9, PY 10, PY 12., PY 13, PY 14, PY 16, PY 17, PY 21, PY 24, PY 30, PY 31, PY 32, PY 33, PY 34, PY 34:1, PY 35, PY 35:1, PY 36, PY 36:1, PY 37, PY 37:1, PY 38, PY 39, PY 39, PY 40, PY 41, PY 42, PY 43, PY44, PY45, PY 46, PY 47, PY 48, PY 53, PY 55, PY 61, PY 62, PY 62:1, PY 63, PY 65, PY 73, PY 74, PY 75, PY 77, PY 81, PY 83, PY 87, PY 93, PY 94, PY 95, PY 97, PY 98, PY 100, PY 101, PY 104, PY 105, PY 108, PY 109, PY 110, PY 111, PY 112, PY 113, PY 115, PY 116., PY 117, PY 118, PY 119, PY 120, PY 126, PY 127, PY 127:1, PY 128, PY 129, PY 130, PY 133, PY 134, PY 136, PY 137, PY138, PY 139, PY 147, PY 148, PY 150, PY 151, PY 152, PY 153, PY 154, PY 155, PY 156, PY PY 172, PY 173, PY 174, PY 175, PY 176, PY 179, PY 180, PY 181, PY 182, PY 183, PY 184, PY 185, PY 188, PY 189, PY 190, PY 191, PY 191:1, PY 192, PY 193., PY 194, PY 200, PY 203, PY 204, PY 207, PY 216, PY 219, PY 223, PY 224, PY 226, PY227, Bile Yellow, Jarosite, Lead-Tin Antimony Yellow, Lead-tin Yellow type, I, Lead-tin yellow type, II, Limonite, Mori Yellow Basic, Mercury Sulfate, Pararealgar, Platina Yellow, Safflower, Tungsten Yellow

CI pigment orange:
NO 2, NO 4, NO 5, NO 6, PO 1, PO 2, PO 3, PO 5, PO 13, PO 16, PO 17, PO 17:1, PO 20, PO 20:1, PO 21, PO 21:1, PO 23, PO 23:1, PO 34, PO 36, PO 38, PO 40, PO 41, PO 43, PO 45, PO 46, PO 47, PO 48, PO 49, PO 51, PO 52, PO 53, PO 59, PO 60, PO 61, PO 62, PO 64, PO 65, PO 66, PO 67, PO 68, PO 69, PO 71, PO 72, PO 73, PO 74, PO 75, PO 77, PO 78, PO 79, PO 80, PO 81, PO84, PO 86, PO 107, Antimony Orange, Chamotte, IRGAZIN Orange 2037, Kibeni Orange, Lead-tin Orange, MayaCrom Orange OR2800, Mineral Orange Realgar

CI pigment red:
NR 1, NR 2, NR 3, NR 4, NR 6, NR 8, NR 9, NR 10, NR 11, NR 12, NR 16, NR 20, NR 22, NR 23, NR 24, NR 25, NR 26, NR 28, NR 31, PR 1, PR 2, PR 3, PR 4, PR 5, PR 6, PR 7, PR 8, PR 9, PR 12, PR 13, PR 14, PR 15, PR 17, PR 19, PR 21, PR 22, PR 23, PR 31, PR 32, PR 38, PR 39, PR 47, PR 48PR 48:1, PR 48:2, PR 48:3, PR 48:4, PR 49, PR 49:1, PR 49:2, PR 52:1, PR 52:2, PR 53, PR 53:1, PR 57, PR 57:1, PR 57:2, PR 58:4, PR 60, PR 60:1, PR 61, PR 62, PR 63, PR 63:1, PR 69, PR 81, PR 81:1, PR 81:2, PR 81:3, PR 81:4, PR 83, PR 83:1, PR 83:3, PR 85, PR 88, PR 89, PR 90, PR 90:1, PR 101, PR 101:1, PR 102, PR 103, PR 104, PR 105, PR 106, PR 107, PR 108, PR 108:1, PR 109, PR 112, PR 113, PR 113:1, PR 114, PR 119, PR 120, PR 121, PR 122, PR 123, PR 139, PR 144, PR 146, PR 147, PR 148, PR 149, PR 150, PR 160, PR166, PR 168, PR 169, PR 170, PR 170:1, PR 171, PR 172, PR 173, PR 174, PR 175, PR 176, PR 177, PR 178, PR 179, PR 180, PR 181, PR 183, PR 184, PR 185, PR 187, PR 188, PR 190, PR 192, PR 193, PR 194, PR197, PR 200, PR 202, PR 204, PR 206, PR 207, PR 208, PR 209, PR 210, PR 211, PR 212, PR 213, PR214, PR 216, PR220, PR221, PR 223, PR 224, PR 226, PR 230, PR 231, PR 232, PR 233, PR 235, PR 236, PR 238, PR 239, PR 242, PR 243, PR 245, PR 251, PR 252, PR 253, PR 254, PR 255, PR 256, PR 257, PR 258, PR 259, PR 260, PR 262, PR 264, PR 265, PR 266, PR 268, PR 269, PR 270, PR 271, PR 272, PR 273, PR 274, PR 275, PR 276, PR 279, PR 282, PR 286, PR 287, PR 288, PR 571, Cinnabar, Cobalt Red, Egyptian Red Gold, Fuchsite, Garnet, Granite, Piemontite, Pipestone, Pozzuolana Red Earth, Quinacridone pyrrolidone PR, Realgar, Red Coral, Red Jasper, Red Powdered Glass, Red Porphyry, Rhodonite, Sedona

CI pigment violet:
NV 1, PV 1, PV 1:1, PV 1:2, PV 2, PV 2:2, PV 3, PV 3:1, PV 3:3, PV 5, PV 5:1, PV 7, PV 13, PV 14, PV 15, PV 16, PV 18, PV 19, PV 23, PV 25, PV 27, PV 29, PV 31, PV 32, PV 36, PV 37, PV39, PV 42, PV 44, PV 47, PV 48, PV 49, PV 50, PV55, PV 58, PV 171, Amethyst, BV1, BV15, Cobalt Arsenate, Copper Violet, Violet Hematite, Folium, Han Purple, Manganous Phosphate, Purple Sugilite, Purpurite, Silver chromate, Vesuvianite

CI pigment blue:
NB 1, NB 2, PB 1, PB 1:2, PB 9, PB 15, PB 15:1, PB 15:2, PB 15:3, PB 15:4, PB 15:6, PB 15:34, PB 16, PB 17, PB 24, PB 25, PB 27, PB 28, PB 29, PB 30, PB 31, PB 34, PB 35, PB 36, PB 36:1, PB 60, PB 61, PB 61:1, PB 62, PB 63, PB 66, PB 68, PB 71, PB 72, PB 73, PB 74, PB 75, PB 76, PB 79, PB 80, PB 81, PB 82, PB 84, PB 128, Aerinite, Apatite, Azurite, Cavansite, Copper Blue, Cupric Hydroxide, Flourescent Blue 2:1, Han Blue, Kinoite, Kyanite, Lapis Lazuli, Manganese Oxide Blue, Mayan Blue, Pentagonite, Ploss Blue, Riebeckite, Sodalite, Tungsten Blue, Turquoise, Ultramarine Ash, Vivianite, Zinc Iron Ferricyanide

CI pigment green:
NG 1, NG 2, PG 1, PG 2, PG 4, PG 7, PG 8, PG 10, PG 13, PG 14, PG 15, PG 16, PG 17, PG 17 Blk, PG 18, PG 19, PG 20, PG 21, PG 22, PG 23, PG 24, PG 26, PG 36, PG 38, PG 39, PG 41, PG 42, PG 45, PG 48, PG 50, PG 51, PG 55, PG 56, Aegirine, Amazonite, Atacamite, Barium Manganate, Celadonite, Conichalcite, Copper Green, Copper Resinate, Chromium Phosphate, Dioptase Diopside, Egyptian Green, Fuchsite Green Apatite, Green Bice, Jadeite, Malachite, Phosphorescent Green, Serpentine, Tourmaline, Volkonskoite Zoisite

CI pigment brown:
NBk 6, NBr 3, NBr 6, NBr 7, NBr 8, NBr 9, NBr 11, PBr 1, PBr 6, PBr 7, PBr 8, PBr 9, PBr 10, PBr 11, PBr 12, PBr 22, PBr 23, PBr 24, PBr 25, PBr 27, PBr 29, PBr 30, PBr 31, PBr 33, PBr 34, PBr 35, PBr 37, PBr 39, PBr 40, PBr 41, PBr 42, PBr 43, PBr 44, PBr 45, PBr 46, Augite, Bronzite, Egyptian Mummy, Goethite, Hematite, Manganous Chromate, Sicklerite, Siderite, Tigers Eye

CI pigment black:
NBk 1, NBk 2, NBk 3, NBk 4, NBk 6, PBk 1, PBk 6, Shungite, PBk 7, PBk 8, PBk 9, PBk 10, PBk 11, PBk 12, PBk 13, PBk 14, PG 17 Blk, PBk 17, PBk 18, PBk 19, PBk 22, PBk 23, PBk 24, PBk 25, PBk 26, PBk 27, PBk 28, PBk 29, PBk 30, PBk 31, PBk 32, PBk 33, PBk 34, PBk 35, Acetylene Black, Antimony Black, Black Earth, Black Hematite, Black Tourmaline, Cobaltic Oxide, Cuprous Sulfide, Hartshorn Black, Ivory Black, Lead Sulphide, Micaceous Iron Oxide, Magnetite Pyrolusite

CI pigment white:
NW 1, PW 1, PW 2, PW 3, PW 4, PW 5, PW 6, PW 6:1, PW 7, PW 8, PW 10, PW 11, PW 12, PW 13, PW 14, PW 15, PW 16, PW 17, PW 18, PW 18:1, PW 19, PW 20, PW 21, PW 22, PW 23, PW 24, PW 25, PW 26, PW 27, PW 28, PW 30, PW 32, PW 33, Bone White, Ceramic White, Diamond Powder, Egg Shells, Hartshorn, Lead Chloride Hydroxide, Lead Phosphite, Lime White, Manganese Carbonate, Oyster Shells, Sodium Aluminium Silicate, titanium dioxide

Metal and other pigments:
PM1, PM2, PM3, PM4, PM5, PM6, Bismuth Powder, Iron, Metallic Silver, Stainless Steel Powder, Inert Pigments Additives and Fillers, Miscellaneous Historic Natural Pigments Mineral Pigments Unclassified and Exotic Pigments, Oil Paint Driers and Siccative Mediums

The inventive ink formulation may optionally include additives, such as defoamers, levelling agents, wetting additives, waxes, adhesion promoters, rheology modifiers, matting agents and fillers.

Further, combinations of at least one pigment and at least one additive may be used. An example of a mixture of additives and pigments is a pigment concentrate. A pigment concentrate typically consists of one or more pigments, binder, additives and optionally solvents. The binder itself can have different chemistry and can for example be a long-oil, medium-oil, or short-oil alkyd resin, a ketonic resin, an epoxy resin, an epoxy acrylate, a polyester acrylate, water-soluble acrylic resins or aqueous mix of polymeric surfactants. Additives present in the pigment concentrate can for example consist of defoaming agents, dispersing and wetting agents, coalescent agents, antiskin agents, anti-sedimentation additives, hardeners, preservatives, monomers and oligomers. Dispersing agents such as suitable Solsperse agents from Lubrizol or Disperbyk agents from BYK can also be used as additives. The actual production of a pigment concentrate is then performed by mixing the components and subjecting the mixture to various milling technologies such as bead milling and three-roll milling either exclusively or in combination. A number of passes through each mill may be required in order to achieve a satisfactory result.

If the inventive ink formulation comprises one or more pigment concentrate, the inventive ink formulation includes the one or more pigment concentrate preferably in an amount from 0.1 to 60 % by weight and more preferably in an amount of from 0.1 to 50 % by weight.

It is a further aspect of the invention to provide a process for printing by means of flexographic printing techniques comprising the steps of:
a) mounting a flexographic printing element on a printing cylinder,
b) transferring radiation curable ink according to one of the described ink formulations to the printing element,
c) transferring the radiation curable ink form the printing element to a print medium, and
d) curing the ink using one or more UV LEDs.

In step a) a flexographic printing element is mounted onto a cylinder of a printing press. The flexographic printing element carries a relief wherein image areas are raised above non image areas.

In step b) radiation curable ink is transferred from an ink tank of the printing press to the printing element. For this transfer, one or more rollers are used. Excess ink on the printing element may be removed by using a scraper or doctor blade.

In step c) the print medium is brought in contact with the printing element. Usually the printing medium is transported using one or more rollers and transferred into a nip between the printing element and an impression cylinder.

In step d) the print medium is exposed to UV radiation in order to cure the ink. One or more LED is used as UV light source. The emitted UV light from LED light sources is nearly monochromatic. The wavelength that is emitted from the most common commercial LED light sources is at 405 nm or 395 nm or 385 nm or 365 nm.

The print medium is preferably paper or plastic. Suitable plastic materials include biaxially oriented polypropylene film (BOPP), polyethylene (PE), topcoated polyethylene (TCPE), polypropylene (PP), topcoated polypropylene (TCPP), oriented polypropylene (OPP), polyethyleneteraphthalate (PET), oriented polystyrene (OPS), polyvinylchloride (PVC), polyethylene vinyl acetate (EVA), polyvinyldichloride (PVdC).

A further aspect of the invention is to provide a food packaging or label for food packaging which has been printed or coated using the proposed printing process.

The migration of substances of the food packaging or of the label is lower than prescribed in SR 817.023.21 of November 23, 2005. For measuring the specific migration levels of the inks, a sample is exposed to 95% ethanol as simulant for 10 days at 40°C as specified in "Commission regulation (EU) No. 10/2011" of January 14, 2011.

### Examples

Two inventive and two comparative examples have been prepared. Two opaque white ink formulations and two transparent ink formulations have been prepared. The components of the white opaque ink formulations are listed in table 1 and the components of the transparent ink formulations are listed in table 2. The numbers given in the tables are parts by weight.

The ink formulations have been prepared by mixing the components. In order to dissolve bis(2,4,6-trimethylbenzoyl)-phenylphosphineoxide the formulation has to be heated. This has been done by using a high speed mixer causing the temperature to rise during mixing. 250g to 1500g of the formulations in the examples have been produced using a Silverson L5M Laboratory Mixer. The speed of the mixer has been about 5000rpm and the composition has been mixed during 20 to 40 minutes. The composition has then reached a temperature of between 55°C and 70°C.

For measuring the specific migration levels of the inks, the inks were printed on a 38µm thick biaxially oriented polypropylene (BOPP) material. The migration test was performed with 95% ethanol as simulant for 10 days at 40°C as specified in "Commission regulation (EU) No. 10/2011" of January 14, 2011. Migration data for the comparative example 1 and the inventive example 1 are presented in Table 3.

**Table 1:**

| | Comparative example 1 | Example 1 |
|---|---|---|
| Epoxy acrylate (CN104D80) | 9.3 | 2.1 |
| Amine modified polyether acrylate (Laromer LR 8996) | 10.3 | 5.3 |
| Dipentaerythritolhexaacrylate (MIRAMER M600) | | 2.6 |
| Polyether tetraacrylate (Ebecryl 45) | | 6.9 |
| TiO₂ | 37.2 | 38.1 |
| Bis(2,4,6-trimethylbenzoyl)-phenylphosphineoxide (Irgacure 819) | 3.1 | 3.1 |
| Di-ester of carboxymethoxybenzophenone and polytetramethyleneglycol 250 (Omnipol BP) | 1.0 | 2.1 |
| Di-ester of carboxymethoxy thioxanthone and polytetramethyleneglycol 250 (Omnipol TX) | 1.4 | 1.5 |
| 2-ETHYLHEXYL-p-DIMETHYLAMINOBENZOATE (Genocure EHA) | | 0.1 |
| Amine acrylate (Photomer 4775) | 8.3 | 9.5 |
| Amine modified polyether acrylate (Genomer 3497) | | 4.0 |
| Amine modified polyether acrylate (Ebecryl 85) | | 2.1 |
| TMPEOTA (MIRAMER M3130) | 29.3 | 22.6 |

**Table 2:**

| | Comparative example 2 | Example 2 |
|---|---|---|
| Epoxy acrylate (CN104D80) | 11.4 | |
| Dipentaerythritolhexaacrylate (MIRAMER M600) | | 12.4 |
| Epoxy acrylate (EBECRYL 3701) | 6.2 | 6.2 |
| Polyether tetraacrylate (Ebecryl 45) | | 5.2 |
| OMYACOAT 850-OG | 9.3 | 9.3 |
| Bis(2,4,6-trimethylbenzoyl)-phenylphosphineoxide (Irgacure 819) | 3.1 | 3.1 |
| Di-ester of carboxymethoxybenzophenone and polytetramethyleneglycol 250 (OMNIPOL BP) | 1.0 | 2.1 |
| Di-ester of carboxymethoxy thioxanthone and polytetramethyleneglycol 250 (OMNIPOL TX) | 1.2 | 3.3 |
| Amine acrylate (Photomer 4775) | 9.3 | 10.3 |
| Amine modified polyether acrylate (Ebecryl 85) | | 5.2 |
| Propoxylated glycerol triacrylate (OTA 480) | | 9.3 |
| Amine modified polyether acrylate (Genomer 3497) | 9.3 | 10.3 |
| TMPEOTA (MIRAMER M3130) | 49.2 | 23.4 |

**Table 3:**

| | Migration result, µg/dm² |
|---|---|
| | TMPEOTA |
| Comparative example 1 | 7,0 |
| Example 1 | <1 |

## Claims

1. A radiation curable ink formulation comprising
a) 10 to 70 % by weight of at least one trifunctional (meth)acrylate monomer as component A, the at least one trifunctional (meth)acrylate monomer selected from the group consisting of trimethylolpropane triacrylate, ethoxylated trimethylolpropane triacrylate, pentaerythritol triacrylate, propoxylated glycerine triacrylate and mixtures thereof,
b) 5 to 40 % by weight of at least one (meth)acrylate monomer with a functionality of 4 or higher as component B, the at least one (meth)acrylate monomer selected from the group consisting of pentaerythritol tetraacrylate, ethoxylated pentaerythritol tetraacrylate, di-trimethylolpropane tetraacrylate, di-pentaerythritol pentaacrylate, dipentaerythritol hexaacrylate and mixtures thereof,
c) 0 to 20 % by weight of one or more monofunctional (meth)acrylate monomers and/or difunctional (meth)acrylate monomers as component C, the one or more difunctional (meth)acrylate monomer selected from the group consisting of dipropylene glycol diacrylate, tripropylene glycol diacrylate, 1,6 hexanediol diacrylate, triethyleneglycol divinylether, 1,4-cyclohexane dimethanol divinyl ether and mixtures thereof,
d) 2 to 30 % by weight of at least one photoinitiator as component D, the at least one photoinitiator being selected from the group consisting of di-ester of carboxymethoxybenzophenone and polytetramethyleneglycol 250, di-ester of carboxymethoxy thioxanthone and polytetramethyleneglycol 250, Bis(2,4,6-Trimethylbenzoyl)phenylphosphine oxide and mixtures thereof,
e) 15 to 50 % by weight of at least one amine synergist as component E, the at least one amine synergist being selected from the group consisting of aminobenzoates, acrylated amines and amine modified acrylates and mixtures thereof,
f) 0 to 40 % by weight of one or more (meth)acrylate oligomer as component F, the one or more (meth)acrylate oligomer being selected from the group consisting of epoxy acrylates, polyester acrylates, urethane acrylates, melamine acrylates, polyether acrylates, acrylic acrylates and mixtures thereof, and
g) 0 to 60 % by weight of one or more pigment and/or additive as component G.

2. The radiation curable ink of any one of claim 1, wherein the radiation curable ink comprises at least one meth(acrylate) oligomer in an amount of from 0.1 to 40 % by weight as component F.

3. The radiation curable ink of claim 1 or 2, wherein the radiation curable ink additionally comprises at least one pigment in an amount of from 0.1 to 60 % by weight as component G.

4. The radiation curable ink of claim 3, wherein the at least one pigment is provided as a mixture of additives and pigments.

5. A process for printing by means of flexographic printing techniques comprising the steps of:
a) mounting a flexographic printing plate on a printing cylinder,
b) transferring radiation curable ink as defined in any one of claims 1 to 4 to the printing plate,
c) transferring the radiation curable ink from the printing plate to a print medium, and
d) curing the ink using one or more UV LEDs.

6. The process of claim 5 **characterized in that** the print medium is a food packaging or a label for food packaging.

7. Printed food packaging or label for food packaging obtained using a process according to claim 5 or 6.

## Patentansprüche

1. Strahlungshärtbare Tintenformulierung, die aufweist:
a) 10 bis 70 Gewichtsprozent von wenigstens einem trifunktionalen (Meth)acrylatmonomer als Komponente A, wobei das wenigstens eine trifunktionale (Meth)acrylatmonomer ausgewählt ist aus der Gruppe, die besteht aus Trimethylolpropantriacrylat, ethoxyliertes Trimethylolpropantriacrylat, Pentaerythritoltriacrylat, propoxyliertes Glyzerintriacrylat und Mischungen davon,
b) 5 bis 40 Gewichtsprozent von wenigstens einem (Meth)Acrylatmonomer mit einer Funktionalität von 4 oder höher als Komponente B, wobei das wenigstens eine (Meth)Acrylatmonomer ausgewählt ist aus der Gruppe, die besteht aus Pentaerythritoltetraacrylat, ethoxyliertes Pentaerythritoltetraacrylat, Di-Trimethylolpropan-Tetraacrylat, Dipentaerythritolpentaacrylat, Dipentaerythritolhexaacrylat und Mischungen davon,
c) 0 bis 20 Gewichtsprozent von einem oder mehreren monofunktionalen (Meth)Acrylatmonomeren und/oder difunktionalen (Meth)Acrylatmonomeren als Komponente C, wobei das eine oder die mehreren difunktionalen (Meth)Acrylatmonomer(e) ausgewählt ist/sind aus der Gruppe, die besteht aus Dipropylenglykoldiacrylat, Tripropylenglykoldiakrylat, 1,6-Hexandiol-diacrylat, Triethylenglykol-Divinylether, 1,4- Cyclohexandimethanol-Divinylether und Mischungen davon,
d) 2 bis 30 Gewichtsprozent von wenigstens einem Photoinitiator als Komponente D, wobei der wenigstens eine Photoinitiator ausgewählt ist aus der Gruppe bestehend aus einem Diester von Carboxymethoxy-benzophenon und Polytetramethylenglykol 250, Diester von Carboxymethoxy-thioxanthon und Polytetramethylenglykol 250, Bis(2,4,6-Trimethylbenzoyl)phenylphosphinoxid und Mischungen davon,
e) 15 bis 50 Gewichtsprozent von wenigstens einem Aminsynergist als Komponente E, wobei der wenigstens eine Aminsynergist ausgewählt ist aus der Gruppe bestehend aus Aminobenzoaten, acrylierten Aminen und aminmodifizierten Acrylaten und Mischungen davon,
f) 0 bis 40 Gewichtsprozent von einem oder mehreren (Meth)Acrylatoligomer(e) als Komponente F, wobei das eine oder die mehreren (Math)Acrylatoligomer(e) ausgewählt ist/sind aus der Gruppe, die besteht aus Epoxyacrylaten, Polyesteracrylaten, Urethanacrylaten, Melaminacrylaten, Polyetheracrylaten, acrylischen Acrylaten und Mischungen davon, und
g) 0 bis 60 Gewichtsprozent von einem oder mehreren Pigmenten und/oder Zusatzstoffen als Komponente G.

2. Strahlungshärtbare Tinte nach einem von Anspruch 1, wobei die strahlungshärtbare Tinte wenigstens ein Meth(acrylat)oligomer in einer Menge von etwa 0,1 bis 40 Gewichtsprozent als Komponente F aufweist.

3. Strahlungshärtbare Tinte nach Anspruch 1 oder 2, wobei die strahlungshärtbare Tinte ferner wenigstens ein Pigment in einer Menge von etwa 0,1 bis 60 Gewichtsprozent als Komponente G aufweist.

4. Strahlungshärtbare Tinte nach Anspruch 3, wobei das wenigstens eine Pigment als eine Mischung von Zusatzstoffen und Pigmenten vorgesehen wird.

5. Druckprozess zum Drucken mittels flexografischer Druckverfahren, der die Schritte aufweist:
a) Montieren einer flexografischen Druckplatte auf einem Druckzylinder,
b) Übertragen der strahlungshärtbaren Tinte wie in einem der Ansprüche 1 bis 4 definiert, auf die Druckplatte,
c) Übertragen der strahlungshärtbaren Tinte von der Druckplatte auf ein Druckmedium, und
d) Härten der Tinte unter Verwendung von einer oder mehreren UV-LEDs.

6. Prozess nach Anspruch 5, **dadurch gekennzeichnet, dass** das Druckmedium eine Nahrungsmittelverpackung oder ein Etikett für eine Nahrungsmittelverpackung ist.

7. Gedruckte Nahrungsmittelverpackung oder Etikett für Nahrungsmittelverpackung, die/das unter Verwendung eines Prozesses nach Anspruch 5 oder 6 erhalten wurde.

## Revendications

1. Formulation d'encre durcissable par rayonnement comprenant
a) de 10 à 70 % en poids d'au moins un monomère méthacrylate tri-fonctionnel en tant que composant A, le au moins un monomère méthacrylate tri-fonctionnel étant sélectionné à partir du groupe constitué par du triacrylate de triméthylolpropane, triacrylate de triméthylolpropane éthoxylé, triacrylate de pentaérythritol, triacrylate de glycérine propoxylé et des mélanges de ceux-ci,
b) de 5 à 40 % en poids d'au moins un monomère méthacrylate présentant une fonctionnalité supérieure ou égale à 4 en tant que composant B, le au moins un monomère méthacrylate étant sélectionné à partir du groupe constitué par du tétraacrylate de pentaérythritol, du tétraacrylate de pentaérythritol éthoxylé, du tétraacrylate de di-triméthylolpropane, du pentaacrylate de dipentaérythritol, du hexaacrylate de dipentaérythritol et des mélanges de ceux-ci,
c) de 0 à 20 % en poids d'un ou plusieurs monomères méthacrylate monofonctionnels et/ou monomères méthacrylate di-fonctionnels en tant que composant C, les un ou plusieurs monomères méthacrylate di-fonctionnels étant sélectionnés à partir du groupe constitué par du diacrylate de dipropylène glycol, du diacrylate de tripropylène glycol, du diacrylate de 1,6 hexanediol, de l'éther divinylique de triéthylène glycol, de l'éther divinylique de 1,4-cyclohexane diméthanol et des mélanges de ceux-ci,
d) de 2 à 30 % en poids d'au moins un photoinitiateur en tant que composant D, le au moins un photoinitiateur étant sélectionné à partir du groupe constitué par un di-ester de carboxyméthoxybenzophénone et de polytétraméthylèneglycol 250, un di-ester de carboxyméthoxy thioxanthone et de polytétraméthylèneglycol 250, un oxyde de bis(2,4,6-triméthylbenzoyl)phénylphosphine et des mélanges de ceux-ci,
e) de 15 à 50 % en poids d'au moins un synergiste amine en tant que composant E, le au moins synergiste amine étant sélectionné à partir du groupe constitué par des aminobenzoates, des amines acrylées et acrylates modifiés par amine et des mélanges de ceux-ci,
f) de 0 à 40 % en poids d'un ou plusieurs oligomères méthacrylate en tant que composant F, le au moins un oligomère méthacrylate étant sélectionné à partir du groupe constitué par des époxy acrylates, des polyester acrylates, des uréthane acrylates, des mélamines acrylates, des polyéther acrylates, des acrylates acryliques et des mélanges de ceux-ci, et
g) de 0 à 60 % en poids d'un ou plusieurs pigments et/ou additif en tant que composant G.

2. Encre durcissable par rayonnement selon la revendication 1, dans laquelle l'encre durcissable par rayonnement comprend au moins un oligomère méthacrylate en une quantité de 0,1 à 40 % en poids en tant que composant F.

3. Encre durcissable par rayonnement selon la revendication 1 ou 2, dans laquelle l'encre durcissable par rayonnement comprend en plus au moins un pigment en une quantité de 0,1 à 60 % en poids en tant que composant G.

4. Encre durcissable par rayonnement selon la revendication 3, dans laquelle le au moins un pigment est fourni sous la forme d'un mélange d'additifs et de pigments.

5. Procédé d'impression au moyen de procédés d'impression par flexographie comprenant les étapes de :
a) montage d'une plaque d'impression par flexographie sur un cylindre d'impression,
b) transfert d'une encre durcissable par rayonnement selon l'une quelconque des revendications 1 à 4 vers la plaque d'impression,
c) transfert de l'encre durcissable par rayonnement à partir de la plaque d'impression vers un support d'impression, et
d) durcissement de l'encre en utilisant une ou plusieurs lampes électroluminescentes en UV.

6. Procédé selon la revendication 5, **caractérisé en ce que** le support d'impression est un emballage ou une étiquette alimentaire pour conditionnement alimentaire.

7. Emballage ou étiquette alimentaire imprimé pour conditionnement alimentaire obtenu en utilisant un procédé selon la revendication 5 ou 6.
